# EUROPEAN PATENT APPLICATION

(11) **EP 4 458 122 A1**
(43) Date of publication of application: **06.11.2024**
(21) Application number: 23171923.8
(22) Date of filing: 05.05.2023
(51) Int. Cl.: A01B 61/04, A01B 3/46

(54) **REVERSIBLE PLOUGH**

(71) Applicant: CNH Industrial Sweden AB, 590 96 Överum (SE)
(72) Inventor: Hertzog, Daniel, 590 96 Överum (SE); Wallin, Per, 590 96 Överum (SE); Nilsson, Ola, 590 96 Överum (SE); Nåhdin, Rickard, 590 96 Överum (SE)
(74) Representative: Raasch, Detlef

(57) **Abstract**

A reversible plough comprising: a beam (542), which supports a pair of plough bodies (522); a main frame; a beam housing (560) that is connected to the main frame; and two shear components (551, 552). When the two shear components (551, 552) are unbroken, they provide a mechanical connection between the beam (542) and the beam housing (560) to maintain the beam in a working position. One of the shear components (551, 552) is configured to break when one of the pair of plough bodies (522) experiences a sufficiently high reactive force (567) from the ground such that the beam (542) can pivot about the other shear component (551, 552) in order to raise the plough body (522) that experienced the sufficiently high reactive force (567).

## Description

### Background of the Invention

The present disclosure relates to a reversible agricultural plough.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset manner from each other when the plough is in use. Each plough body is connected to the plough frame via corresponding beams. The plough frame, in turn, is connected to a towing or pushing vehicle via a hitch arranged at a front or back end of the frame.

Depending on the density of the soil, a working depth of the plough bodies can be adjusted. For instance, the plough bodies working depth may be shallow in harder (dense) soils, whereas a deeper working depth may be applied in softer (less dense) soils. The plough bodies can be rigidly attached to the main frame, such that their distance from the main frame remains constant. Accordingly, the working depth of the ploughs are then adjusted by varying the ground clearance of the main frame. If the main frame is brought closer to the ground surface, the ground clearance is reduced, and the plough bodies penetrate deeper into the soil. Similarly, if the main frame is lifted further off the ground, the ground clearance is increased and the plough bodies are lifted, thereby reducing the working depth.

The ground clearance of the main frame may be controlled by one or more depth wheels. The one or more depth wheels may be connected to any part of the main frame such as the rear end of the main frame. An adjustable linkage may be provided between the main frame and the depth wheel to allow for changes in the distance between the depth wheel and the main frame. During ploughing, the depth wheel runs on the ground surface and supports the weight of the plough. If the distance between the depth wheel and the main frame is reduced, then the ground clearance between the main frame and the ground surface reduces accordingly. On the other hand, if the distance between the depth wheel and the main frame is increased, the ground clearance of the main frame increases. As outlined before, changing the main frame's ground clearance results in a variation of the plough body working depth.

Most modern ploughs are of the reversible type, in which the main frame is rotatable by 180 degrees (i.e. reversed) with respect to the headstock. A turning cylinder attached to the headstock may be used to rotate (reverse) the plough. During rotation of the main frame, a first set of plough bodies, which was initially arranged below the main frame (first working configuration), is transferred to the top of the main frame. At the same time, a second set of plough bodies, which was initially arranged on top of the main frame, is then transferred to a position below the main frame. The reversible plough is then in its second working configuration. The main frame may be repeatedly rotated (reversed) between the first and second working configuration, particularly during turning manoeuvres on the headlands. Whenever the plough is reversed, the first and second set of plough bodies swap position.

In reversible ploughs, a means of adjusting the working depth of the plough bodies (i.e. the main frame) is required for both configurations of the reversible plough. There are mainly two types of depth control wheels for reversible ploughs. A first type includes a single pivoting depth wheel, which is used in both configurations of the reversible plough. The single pivoting depth wheel has to be moved from one side of the main frame to the other during reversal. This side transfer of the single depth wheel may be achieved by swinging the latter from one side to the other.

A second solution avoids the need for a movement of the depth adjustment wheel from one side to the other. In this second alternative, two separate depth wheels may be fixed to the main frame. A first depth wheel can be arranged on a first side of the main frame and a second depth wheel may be arranged on the second, opposite side of the main frame. Each of the two wheels is then only utilised in one working configuration of the plough.

### Summary of the Invention

According to a first aspect of the present disclosure, there is provided a reversible plough comprising:
a beam, which supports a pair of plough bodies;
a main frame;
a beam housing that is connected to the main frame;
two shear components that, when unbroken, provide a mechanical connection between the beam and the beam housing to maintain the beam in a working position, and wherein one of the shear components is configured to break when one of the pair of plough bodies experiences a sufficiently high reactive force from the ground such that the beam can pivot about the other shear component in order to raise the plough body that experienced the sufficiently high reactive force.

Advantageously use of these shear components can achieve a relatively high stone trip height, which is not always possible in known stone trip mechanisms. Also beneficially, the same beam and beam housing can be used both for hydraulic stone trip mechanisms and for a stone trip mechanism that uses the shear components.

Each shear component, when unbroken, may maintain the beam in a fixed position with respect to the beam housing.

The two shear components may be spaced apart from each other in a vertical dimension when the plough is in a working configuration.

The lower one of the two shear components may be configured to break when one of the pair of plough bodies experiences a sufficiently high reactive force from the ground.

Each shear component may pass through at least one opening in the beam and at least opening in the beam housing.

Each shear component may comprise a first sleeve and a shear bolt. The shear bolt may pass through the first sleeve. The first sleeve may be configured to maintain the same position relative to either the beam housing or the beam after the shear bolt is broken.

The first sleeve may be located at least partially within an opening in either the beam housing or the beam.

Each shear component may also comprise a second sleeve. The shear bolt may pass through the second sleeve, such that the first sleeve and the second sleeve are spaced apart along the length of the shear bolt. The second sleeve may be configured to maintain the same position relative to the other one of the beam housing and the beam when the shear bolt is broken.

The second sleeve may be located at least partially within an opening in the other one of the beam housing and the beam.

The shear bolt may be configured to break at a position between the first sleeve and the second sleeve.

Each shear component may comprise:
a first shear part; and
a second shear part, wherein the second shear part is spaced apart from the first shear part in a lateral dimension with respect to the direction of travel of the reversible plough when it is in a working configuration;
wherein:
the first shear part, when unbroken, provides a mechanical connection between a first region of the beam and a first region the beam housing to maintain the beam in a working position;
the second shear part, when unbroken, provides a mechanical connection between a second region of the beam and a second region the beam housing to maintain the beam in the working position;
the first region of the beam is spaced apart from the second region of the beam in a lateral dimension with respect to the direction of travel of the reversible plough when it is in the working configuration; and
the first region of the beam housing is spaced apart from the second region of the beam housing in a lateral dimension with respect to the direction of travel of the reversible plough when it is in the working configuration.

The first shear part and the second shear part may each comprise a first sleeve and a shear bolt. Each shear bolt may pass through its respective first sleeve. Each first sleeve may be configured to maintain the same position relative to either the beam housing or the beam when the shear bolts are broken.

The first shear part and the second shear part may each also comprise a second sleeve. Each shear bolt may pass through its respective second sleeve, such that the respective first sleeves and second sleeves are spaced apart with respect to each other along the length of the shear bolt. Each second sleeve may be configured to maintain the same position relative to the other one of the beam housing and the beam when the shear bolts are broken.

Each shear part may be provided as a replaceable cartridge.

Each shear part may comprise a removable mechanical detent for securing the shear part in position with respect to the beam housing and / or the beam.

### Brief Description of the Drawings

One or more embodiments of the present disclosure will now be described by way of example only, with reference to the accompanying drawings, in which:
Figure 1A shows a right-side view of an agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figures 3A, 3B and 3C illustrate part of a plough that includes a hydraulic stone trip mechanism for a plough body and a beam, where the plough body is in a working position;
Figures 4A, 4B and 4C are corresponding views of the part of the plough of Figures 3A - 3C that illustrate the stone trip mechanism where the plough body is in a tripped position;
Figure 5 shows part of a reversible plough according to an embodiment of the present disclosure, when the beam of the plough is in a working position;
Figure 6 shows a cross-sectional view through the shear components, the beam housing and the beam of Figure 5;
Figure 7A shows one of the shear parts of Figure 6;
Figure 7B shows an exploded view of the shear part of Figure 7A;
Figure 8 shows the same part of a reversible plough as that shown in Figure 5, when the beam of the plough is in a tripped position; and
Figure 9 shows a cross-sectional view through the shear components, the beam housing and the beam of Figure 8.

### Detailed Description of the Drawings

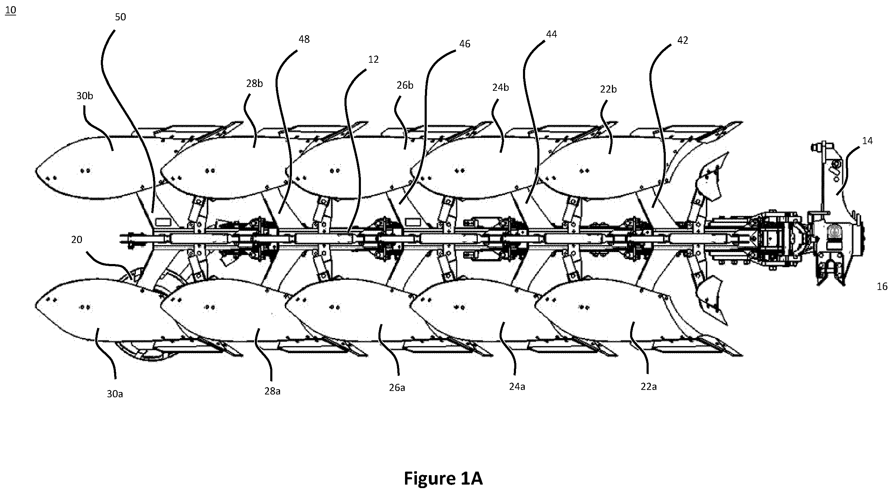

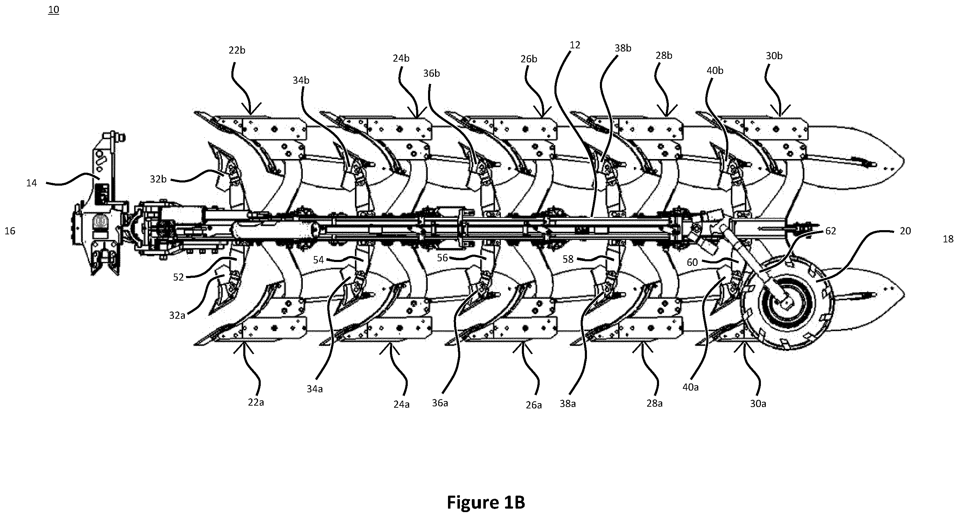

Figures 1A to 1C show various views of an agricultural implement, particularly a plough 10. As will be described in more detail below, the plough 10 shown in Figures 1A to 1C is a reversible plough.

The plough 10 comprises a main frame 12. The main frame 12 may be a rectangular or round tube extending between a headstock 14 at a front end 16 of the plough towards a depth wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first working configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first working configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

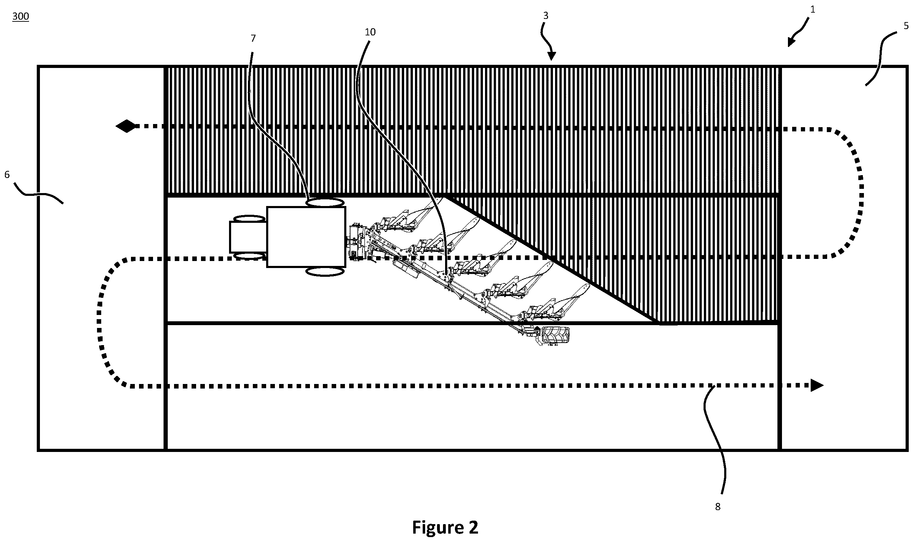

Turning to Figure 2, a typical operation of an agricultural machinery comprising a tractor 7 and a plough 10 is described. In use, the plough 10 is drawn as an attachment (implement) behind an agricultural towing vehicle (e.g. tractor 7). It will be appreciated that it is equivalently feasible to locate the plough 10 in front of or both in front of and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a headland/transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough 10 is also reversed. That is, the main frame 12 is rotated by 180 degrees with respect to the headstock 14 to move the plough from a first working configuration to a second working configuration. In its first working configuration shown in Figures 1A to 1C, the plough 10 is set up such that plough bodies 22a, 24a, 26a, 28a, and 30a of each of the pairs are in contact with the soil. This first working configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second working configuration (not illustrated), the plough 10 is set up such that plough bodies 22b, 24b, 26b, 28b, and 30b of each of the pairs are in contact with the soil. This second working configuration is achieved after rotating the main frame by 180 degrees, such that the majority of plough bodies are arranged to the right of the tractor (not shown). It follows that the second working configuration is also referred to as the "left turning configuration".

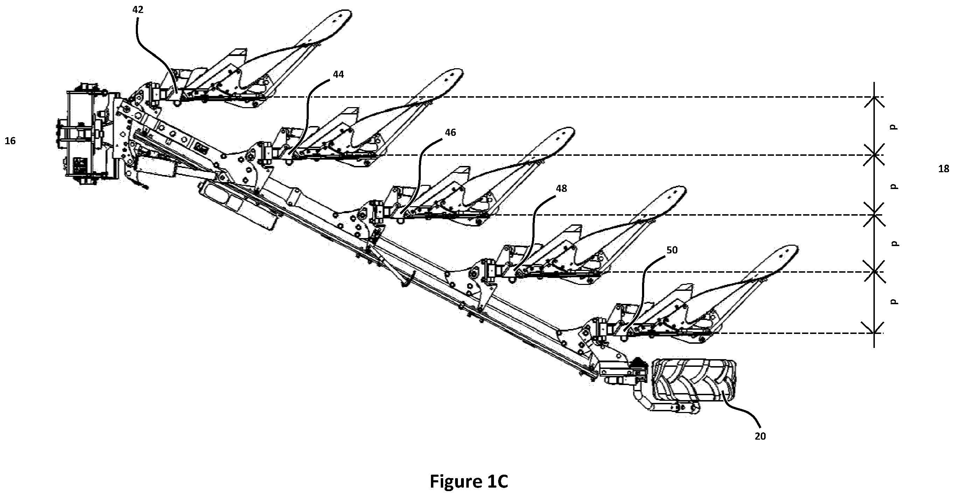

Tilling the field with the plough 10 in this first working configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough 10 reaches the end of the first run, the main frame 12 is rotated by 180 degrees (reversed) with respect to the headstock 14. A turning cylinder (not shown), attached to the headstock 14 may be used to rotate (reverse) the plough 10. During rotation of the main frame, the first plurality of plough bodies, e.g. 22a, 24a, 26a, 28a, 30a, are transferred to the top of the plough 10. At the same time, the second plurality of plough bodies e.g. 22b, 24b, 26b, 28b, 30b, which were not in use in the previous run, is then transferred to the lower end of the plough 10 and will be submerged in the soil during the next run. The reversible plough is then in its second working configuration (not shown).

Executing a second run of the field with the plough 10 in this second working configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b. Reversing the plough 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both working configurations of the plough 10 the main frame 12 is supported by a depth wheel 20. The depth wheel 20 is arranged at the back end 18 of the plough 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes a depth wheel 20, which acts as a depth wheel to adjust the ground clearance of the main frame 12. A linkage provided between the depth wheel 20 and the main frame 12 allows the operator to lift or lower the main frame 12 with respect to a ground surface 80. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by adjusting the link between the depth wheel 20 and the main frame 12, then the working depth of the plurality of first ground engaging tools shown in Figures 1A to 1C is increased, i.e. the plurality of first ground engaging tools are lowered further into the soil. If, on the other hand, the main frame 12 is lifted, then the working depth of the plurality of first ground engaging tools is decreased, i.e. the plurality of first ground engagement tools are pulled out of the soil.

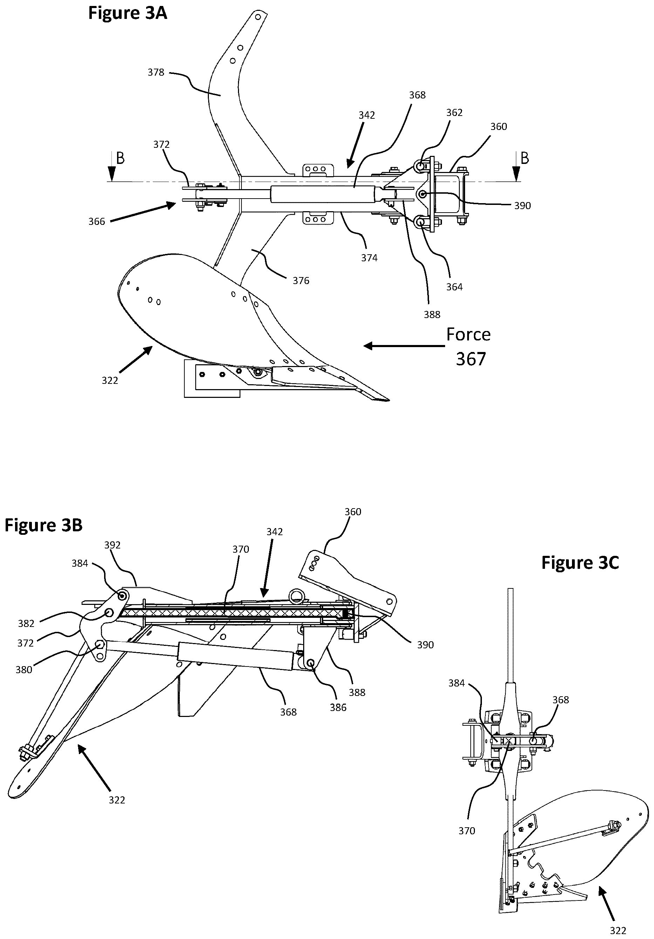

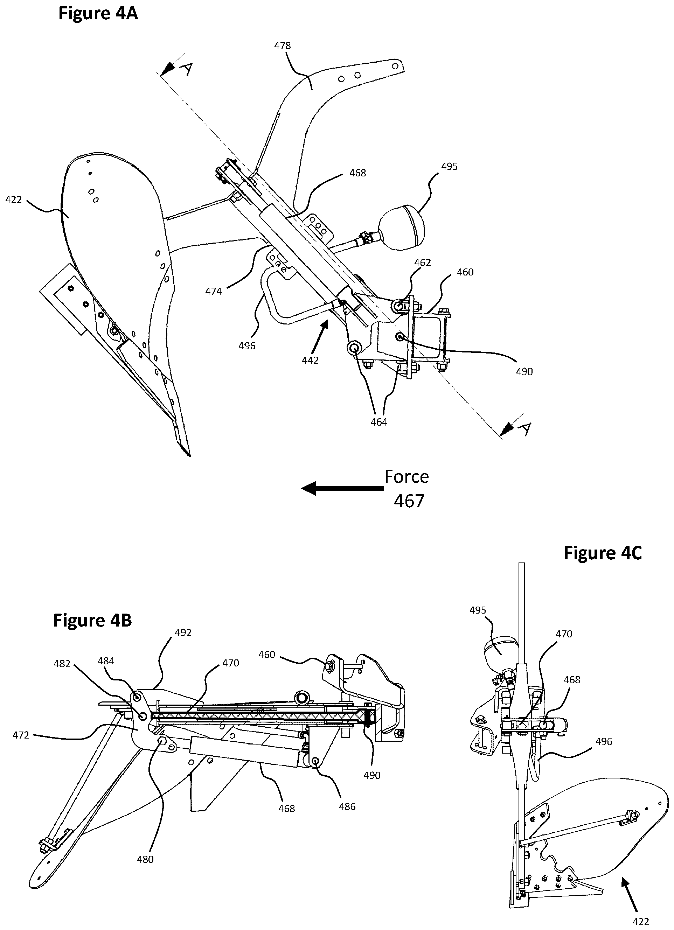

Figures 3A, 3B and 3C illustrate part of a plough that includes a hydraulic stone trip mechanism for a plough body 322 and a beam 342, where the plough body 322 is in a working position. Figure 3A shows a side view, Figure 3B shows a cross-sectional view along the line B-B in Figure 3A, and Figure 3C shows an end view from a distal end of the beam 342. Figures 4A, 4B and 4C are corresponding views that illustrate the stone trip mechanism where the plough body is in a tripped position, as will be described below.

The beam 342 connects the plough body 322 to a frame (not shown) of a reversible plough. The plough body 322 is an example of a first ground engaging tool. These figures show a beam housing 360 that provides a mechanical connection between the beam 342 and the frame. The beam 342 is pivotally connected to the beam housing 360, and therefore is also pivotally connected to the frame. As will be discussed below, the beam housing 360 has two hinge points 362, 364, one of which is usable for each of the first and second working configurations of the reversible plough.

The beam 342 has a substantially Y-shaped structure, which includes a central portion 374, a first beam arm 376 and a second beam arm 378. The central portion 374 of the beam 342 has a proximal end that is pivotally connected to the beam housing 360, and a distal end. The two beam arms 376, 378 extend from the distal end of the beam 342. The first beam arm 376 connects the plough body 322 to the central portion 374 of the beam 342. The second beam arm 378 connects a second plough body (not shown to assist with the clarity of the illustration) to the central portion 374 of the beam 342. The plough body 322 can be used to engage the soil and work the field when the reversible plough is in the first working configuration. The second plough body (not shown) can be used to engage the soil and work the field when the reversible plough is in the second working configuration.

Figures 3A, 3B and 3C also show an actuator mechanism 366 that provides a bias force to the beam 342 such that the plough body 322 is biased towards the working position. The actuator mechanism shown in these figures can also be referred to as a stone trip mechanism. The bias force can be set such that when the plough body 322 is being pulled through soil as the plough is working the field, the plough body 322 maintains its intended orientation. That is, the bias force applied by the actuator mechanism 366 overcomes the reactive force 367 experienced by the plough body as it moves through the soil. However, if the plough body 322 were to hit a stone or other obstruction buried under the ground, then the additional force that is applied to the plough body by the stone is able to overcome the bias force applied by the actuator mechanism such that the beam 342 can pivot about one of the hinge points 362, 364. When the beam 342 pivots in this way, the plough body 322 moves upwards as shown in Figures 4A to 4C such that it is above the stone. Therefore, the ploughing operation does not need to stop when a stone is experienced by the plough body 322. Once the plough body 322 has passed the stone, the bias force applied by the actuator mechanism returns the plough body 322 to its working position.

The actuator mechanism 366 includes a cylinder 368, a connection bar 370 and a linkage 372. The connection bar 370 in this example is mainly located in a cavity that is inside the central portion 374 of the beam 342. In this way, the central portion 374 of the beam 342 can be considered as a sleeve around the connection bar 370. Most of the length of the connection bar 370 is visible in the cross-sectional view of Figure 3B, and an end of the connection bar 370 is also visible in Figure 3C. In Figure 3A, the connection bar 370 is obscured by the cylinder 368 and the beam 342.

In this example, the beam 342 includes a cylinder mounting region (lug) 388 at the proximal end of the central portion 374 of the beam 342, and a linkage mounting region (lug) 392 at the distal end of the central portion 374 of the beam 342. As shown in Figure 3B, the cylinder mounting region 388 and the linkage mounting region 392 extend from opposite sides of the beam 342 such that they are laterally offset from each other at opposite ends of the connection bar 370.

A first end of the linkage 372 is connected to the linkage mounting region 392 at a linkage-beam connection point 384. In this way, the first end of the linkage 372 can rotate relative to the beam 342, but cannot experience a translational movement relative to the beam 342. A second end of the linkage 372 is connected to a first end of the cylinder 368 at a linkage-cylinder connection point 380. A second end of the cylinder 368 is connected to the cylinder mounting region 388 at a cylinder-beam connection point 386. A first end of the connection bar 370 is connected to the beam housing 360 (and therefore also the frame) at a bar-frame connection point 390. A second end of the connection bar 370 is pivotally connected to a mid-point of the linkage 372 at a bar-linkage connection point 382. That is, the bar-linkage connection point 382 is between the linkage-beam pivot point 384 and the linkage-cylinder connection point 380, along a longitudinal direction of the linkage 372.

In this example, the linkage-beam connection point 384, the linkage-cylinder connection point 380, the cylinder-beam connection point 386, the bar-frame connection point 390 and the bar-linkage connection point 382 are all pivot points such that the two associated components are rotatable relative to each other. It will be appreciated that in other examples, one or more of these connection points can be rigid connections that do not allow for relative rotational movement, and that any non-linear or rotational movement can be accommodated by other components in the actuator mechanism 366.

An accumulator (not shown in Figures 3A-3C) maintains a pressure of the fluid in the cylinder 368 when the ground engaging tool 322 is in its working position. The pressure in the cylinder 368 attempts to push the second end of the linkage 372 away from the cylinder mounting region 388, such that it would rotate about the bar-linkage connection point 382 and push the linkage-beam pivot point 384 back towards the beam housing 360. In this way, the central portion 374 of the beam 342 is biased along the connection bar such that it abuts the beam housing 360. Therefore, the bias force applied by the cylinder 368 acts to maintain the beam 342 in its current, working, position with respect to the beam housing 360.

Figures 4A, 4B and 4C illustrate the stone trip mechanism where the plough body 422 is in a tripped position. Features of Figures 4A and 4C that are also shown in Figures 3A to 3C will be given corresponding reference numbers in the 400 series, and will not necessarily be described again. Figures 4A and 4C also show an accumulator 495 that is connected to the cylinder 468 by a hose 496, such that it maintains the pressure of the fluid in the cylinder 468.

In Figures 4A to 4C, the plough body 422 has encountered a stone, which has resulted in a high reactive force 467 on the plough body 422 when it was in its working position. As will be discussed below, this high reactive force 467 is larger than the bias force that is provided by the cylinder 468 such that the beam 442 has pivoted about the first hinge point 462, and the plough body 422 has moved out of the way of the stone. More particularly, since the reactive force 467 will always be experienced by the lower, in-use, plough body, the beam 442 will always pivot about the upper hinge point. Therefore, if the plough were in the second working configuration such that the second beam arm 478 were facing downwards, the beam 442 would pivot about the second hinge point 464 (which would be the upper hinge point) upon experiencing a stone.

As the beam 442 pivots about first hinge point 462, the second hinge point 464 separates and part of the beam 442 moves away from the beam housing 460. The first end of the connection bar 470 is connected to the beam housing 460 at the bar-frame connection point 490, such that the central portion 474 of the beam 442 moves along the connection bar 470 towards the linkage 472. Since the second end of the connection bar 470 is connected to a mid-point of the linkage 472 at a bar-linkage connection point 482, the linkage 472 rotates about the bar-linkage connection point 482. As the linkage 472 rotates, the second end of the linkage 472 (and therefore also the linkage-cylinder connection point 480) moves closer to the cylinder-beam connection point 486. As the linkage-cylinder connection point 480 moves closer to the cylinder-beam connection point 486, the cylinder 468 is compressed. In this way, the beam 442 is only able to rotate about the first hinge point 462 when the reactive force 467 on the plough body 422 results in a force on the cylinder 468 applied by the linkage 472, that is greater than the bias force that is provided by the fluid in the cylinder 468.

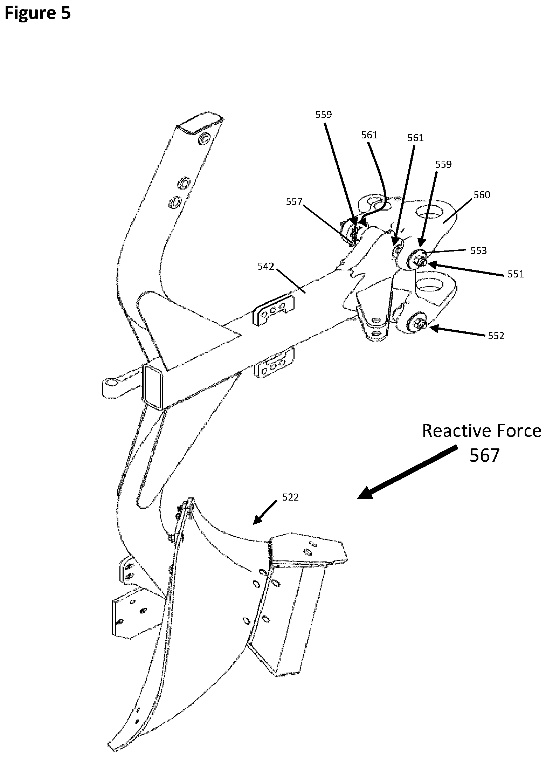

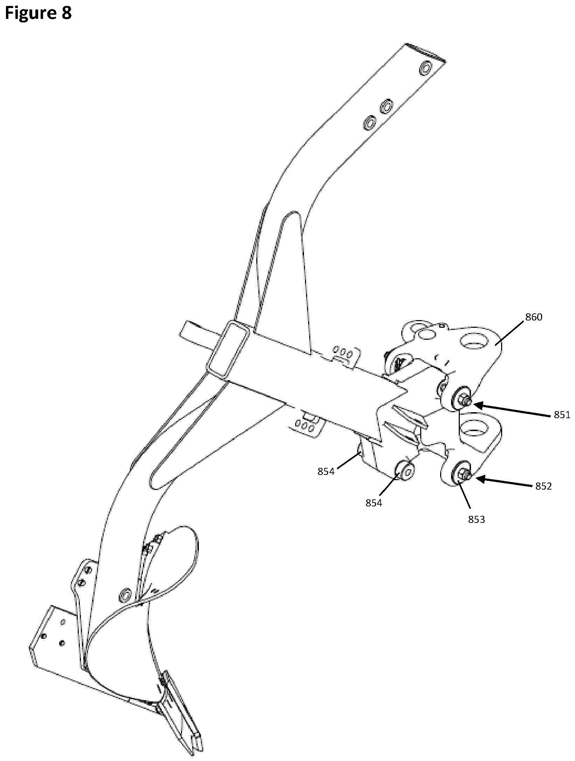

Figure 5 shows part of a reversible plough according to an embodiment of the present disclosure, when the beam of the plough is in a working position. Figure 8 shows the same part of a reversible plough, when the beam of the plough is in a tripped position.

Returning to Figure 5, the beam 542 of the reversible plough supports a pair of plough bodies 522 (only one of which is shown in Figure 5 to assist with the clarity of the illustration). A beam housing 560 is connected to the main frame (not shown) of the reversible plough.

As will be discussed below, two shear components 551, 552 are provided that, when unbroken, provide a mechanical connection between the beam 542 and the beam housing 560 to maintain the beam 542 in a working position. The working position is shown in Figure 5, in that one of the pair of plough bodies 522 is in a position such that it can work the soil. Each shear component 551 passes through two openings 559 in the beam housing 560 and through two openings 561 in the beam 542. Each shear component 551, 552, when unbroken, maintains the beam 542 in a fixed relationship with respect to the beam housing 560.

One of the shear components 551, 552 is configured to break / shear when one of the pair of plough bodies 522 experiences a sufficiently high reactive force 567 from the ground. For example, when the lower one of the pair of plough bodies 522 encounters a stone in the ground. When one of the shear components 551, 552 breaks, the beam 542 can pivot about the other shear component 551, 552 in order to raise the plough body 522 that experienced the sufficiently high reactive force. In this way, the plough body 522 can be moved up and out of the way of any stone that is encountered. This can be referred to as the plough body 522 being in the tripped position, as shown in Figure 8. It will be appreciated that a sufficiently high reactive force 567, which causes one of the shear components 551, 552 to break, is one that is greater than a predetermined force / breaking load of the shear component 551, 552. Shear components 551, 552 can be used that have an appropriate predetermined force / breaking load such that the shear component 551, 552 should not break when the plough body 522 experiences the expected amount of reactive force 567 for the intended ploughing operation, yet will break if the plough body 522 encounters a stone or other obstruction that could otherwise damage the plough.

As shown in Figure 5, the two shear components 551, 552 are spaced apart from each other in a vertical dimension when the plough is in a working configuration. In this way, when the lower, in-use, plough body 522 experiences a sufficiently high reactive force 567 from the ground, the lower one of the two shear components 552 breaks and the beam 542 is able to pivot about the upper, unbroken, shear component 551. In this way, the unbroken, shear component 551 functions as a hinge point in a similar way to the stone trip mechanism that is described and illustrated with reference to Figures 3A-3C and 4A-4C. It will be appreciated from the physics of the beam housing 560, 860 that is illustrated in Figures 5 and 8 that the reactive force 567 will have a greater effect on the upper shear component 551, 851 than the lower shear component 552, 852. Therefore, with an appropriate selection of the predetermined breaking force / load of the shear components 551, 851, 552, 852 the lower shear component 552, 852 can break when the plough body 522 encounters a stone yet the upper shear component 551, 851 can stay intact such that the beam 542 can pivot about the upper shear component 551, 851.

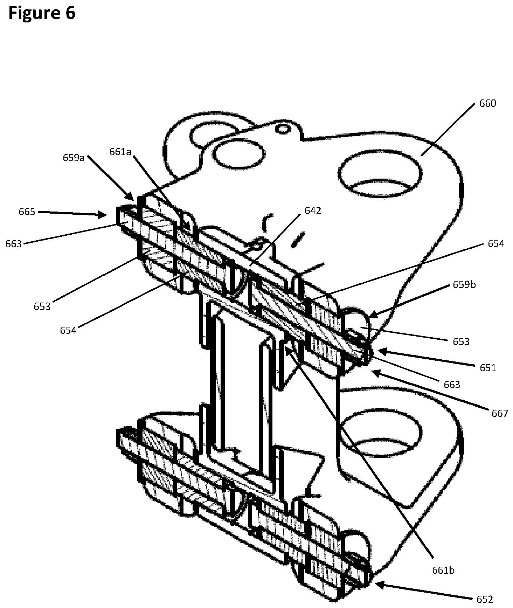

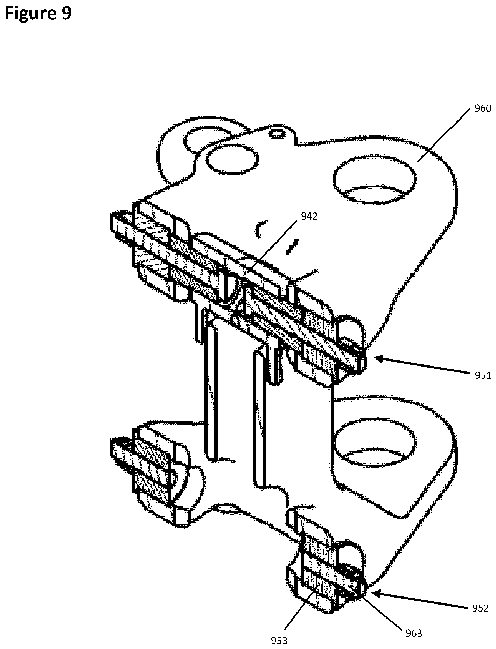

Figure 6 shows a cross-sectional view through the shear components 651, 652, the beam housing 660 and the beam 642 of Figure 5 (i.e. when the beam is in the working position). Only the features of the upper shear component 651, as it is shown in Figure 6, are labelled with reference numbers. However, it can be seen that the lower shear component 652 is identical to the upper shear component 651 in this example. Figure 9 shows a cross-sectional view through the shear components 951, 952, the beam housing 960 and the beam 942 of Figure 8 (i.e. when the beam is in the tripped position).

Referring to Figure 6, the shear component 651 passes through two openings 659a, 659b in the beam housing 660 and also through two openings 661a, 661b in the beam 642. As shown in Figure 6, the two openings 659a, 659b in the beam housing 660 are provided as holes through one of two respective two lugs that are spaced apart from each other in a lateral dimension of the beam housing 660 (lateral with respect to the direction of travel of the reversible plough when it is in a working configuration). In this way, the shear component 651 passes all the way through the two openings / holes 659a, 659b in the beam housing 660. The two openings 661a, 661b in the beam 642 in this example are provided as respective openings at opposite ends of the same cavity in the beam 642. The two openings 661a, 661b into the cavity are spaced apart from each other in a lateral dimension of the beam 642 (again, with respect to the direction of travel of the reversible plough when it is in a working configuration) such that the cavity also extends in a lateral dimension. In this way, the shear component 651 can pass through an opening 661a, 661b in the beam 642 and into the cavity of the beam 642, but does not necessarily need to extend along the entire length of the cavity as shown in Figure 6. This is achieved in Figure 6 because the shear component 651 is provided by two separate parts 665, 667. In another example, a shear component can be used that has a single part that passes through both of the two openings 659a, 659b in the beam housing 660 and also passes through both of the two openings 661a, 661b in the beam 642. Either way, when the shear component 651 is unbroken it mechanically resists movement of the beam 642 relative to the beam housing 660.

The shear component 651 in the example of Figure 6 includes a first shear part 665 and a second shear part 667. The second shear part 667 is spaced apart from the first shear part 665 in a lateral dimension with respect to the direction of travel of the reversible plough when it is in a working configuration. The first shear part 665 passes through a first opening 659a in the beam housing 660 and it passes through a first opening 661a in the beam 642. The second shear part 667 passes through a second opening 659b in the beam housing 660 and it passes through a second opening 661b in the beam 642.

When the first shear part 665 is unbroken, it provides a mechanical connection between a first region of the beam 642 and a first region the beam housing 660 to maintain the beam 642 in a working position. In this example: the first region of the beam 642 is the region in which the first opening 661a in the beam 642 is provided; and the first region of the beam housing 660 is the lug of the beam housing 660 through which the first opening 659a is provided. Similarly, when the second shear part 667 is unbroken it provides a mechanical connection between a second region of the beam 642 and a second region the beam housing 660 to maintain the beam 642 in a working position. The second region of the beam 642 is the region in which the second opening 661b in the beam 642 is provided; and the second region of the beam housing 660 is the lug of the beam housing 660 through which the second opening 659b is provided. The first region of the beam 642 is spaced apart from the second region of the beam 642 in a lateral dimension. Similarly, the first region of the beam housing 660 is spaced apart from the second region of the beam housing 660 in a lateral dimension.

The first shear part 665 and the second shear part 667 in this example each include an inner sleeve 654, an outer sleeve 653 and a shear bolt 663. Either of the inner sleeve 654 and the outer sleeve 653 can be referred to as a first sleeve. The other one of the inner sleeve 654 and the outer sleeve 653 can be referred to as a second sleeve. In some examples, only one of the inner sleeve 654 and the outer sleeve 653 can be provided. In which case, the functionality of the other sleeve can be incorporated into the beam 642 or the beam housing 660 instead of being provided as part of the shear part 665, 667.

Each shear bolt 663 passes through its respective inner sleeve 654 and outer sleeve 653. The inner sleeve 654 and the outer sleeve 653 are spaced apart with respect to each other along the length of the shear bolt 663, in this example such that the inner sleeve 654 abuts the outer sleeve 653. The shear bolt 663 is configured to break / shear at a position between the inner sleeve 654 and the outer sleeve 653. In this way, the two sleeves 653, 654 can move relative to each other when the shear bolt 663 is broken. Whereas the two sleeves 653, 654 retain a fixed physical relationship with respect to each other when the shear bolt 663 is unbroken. Advantageously, use of the two sleeves 653, 654 in this way can result in a clean break in the shear bolt 663.

The inner sleeve 654 in this example is located at least partially within the opening 661a, 661b in the beam 642. In this way, the inner sleeve 654 maintains the same position relative to the beam 642 both when the shear bolt 663 is unbroken (as shown in Figure 6) and when it is broken (as shown in Figure 8).

The outer sleeve 653 in this example is located at least partially within the opening 659a, 659b in the beam housing 660. In this way, the outer sleeve 653 maintains the same position relative to the beam housing 660 both when the shear bolt 663 is unbroken (as shown in Figure 6) and when it is broken (as shown in Figures 8 and 9).

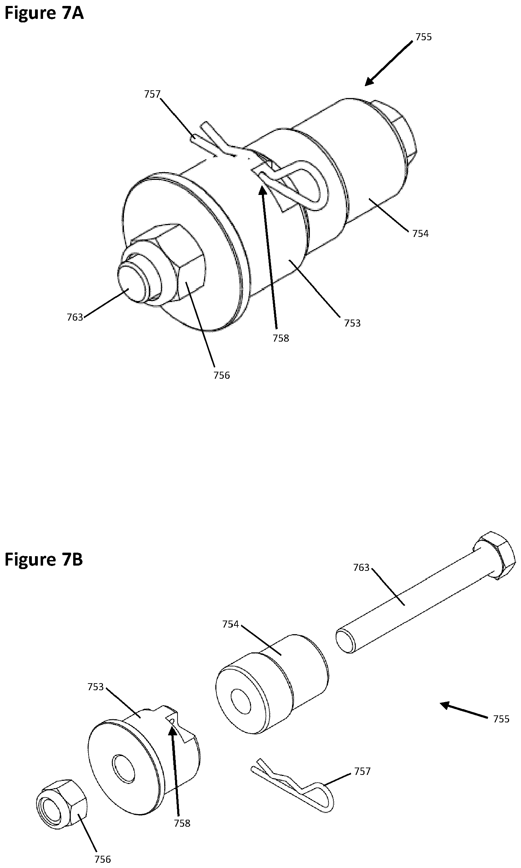

Turning now to Figures 7A and 7B, Figure 7A shows one of the shear parts 755 of Figure 6. Figure 7B shows an exploded view of the shear part 755 of Figure 7A. Figures 7A and 7B show how the shear bolt 763 passes through the inner sleeve 754 and the outer sleeve 753. In this example, a nut 756 is attached to the shear bolt 763 in order to keep the inner and outer sleeves 754, 753 in position, such that they abut each other, on the shear bolt 763. The shear part 755 can advantageously be considered as a replaceable cartridge. That is, after the shear bolt 763 has broken it can be easy to remove the two broken parts of the shear part 755 from the reversible plough, return the beam to its working position (such that the openings in the beam and the beam housing are aligned), and then insert a new shear part cartridge by hand. In this way, a new replacement shear part can quickly and easily be inserted into the plough following a stone trip thereby enabling quick and efficient maintenance of the plough.

A further advantage of the shear part cartridge 755 of Figure 7 is that the sleeves 753, 754 absorb the force that passes through the shear bolt 763 when it is broken. If either of the sleeves 753, 754 are deformed when the shear bolt 763 is broken, then it will not result in any ongoing degradation of the performance of the plough because the sleeves 753, 754 will be replaced as part of the shear part cartridge 755. If the shear part cartridge 755 did not have the sleeves 753, 754, then potentially the beam and / or the beam housing could be damaged when the shear bolt 763 is broken.

In this example, the shear part 755 also includes a removable mechanical detent 757 for securing the shear part 755 in position with respect to the beam housing. In another example, a removable mechanical detent can be used that additionally or alternatively secures the shear part in position with respect to the beam. As shown in Figures 7A and 7B, the mechanical detent 757 can be provided as a pin that is located through a hole 758 in the outer sleeve 753. As can be seen in Figure 5, when the pin 557 is located in the hole in the outer sleeve 553 it provides a mechanical detent that prevents the shear part from being removed from the beam 542 and the beam housing 560. This is because, in this example, the pin 557 is located between the lug of the beam housing 560 (through which the hole 559 passes) and the opening in the 559 in the beam 542. In order to replace a broken shear part, the user should first remove the pin 557 such that the outer sleeve 753 of the broken shear part can be removed.

Advantageously, the same beam and beam housing blank can be used both for the stone trip mechanism of Figures 3A-3C and 4A-4C and for the apparatus of Figures 5-9 that uses the shear components. It can be seen from the figures that both of these solutions for responding to a stone trip cause the beam to pivot about the same hinge points. Therefore, a plough can be provided that has flexibility with which stone trip mechanism is employed without requiring significant changes to the fundamental hardware of the plough. Furthermore, the apparatus of Figures 5-9 that uses the shear components can beneficially achieve a relatively high stone trip height, which is not always possible in known stone trip mechanisms.

## Claims

1. A reversible plough comprising:
a beam (542), which supports a pair of plough bodies (522);
a main frame;
a beam housing (560) that is connected to the main frame;
two shear components (551, 552) that, when unbroken, provide a mechanical connection between the beam (542) and the beam housing (560) to maintain the beam (542) in a working position, and wherein one of the shear components (551, 552) is configured to break when one of the pair of plough bodies (522) experiences a sufficiently high reactive force (567) from the ground such that the beam (542) can pivot about the other shear component (551, 552) in order to raise the plough body (522) that experienced the sufficiently high reactive force (567).

2. The reversible plough of claim 1, wherein each shear component (551, 552), when unbroken, maintains the beam (542) in a fixed position with respect to the beam housing (560).

3. The reversible plough of any preceding claim, wherein the two shear components (551, 552) are spaced apart from each other in a vertical dimension when the plough is in a working configuration.

4. The reversible plough of claim 3, wherein the lower one of the two shear components (552) is configured to break when one of the pair of plough bodies (522) experiences a sufficiently high reactive force (567) from the ground.

5. The reversible plough of any preceding claim, wherein each shear component (551, 552) passes through at least one opening (561) in the beam (542) and at least opening (559) in the beam housing (560).

6. The reversible plough of any one of claims 1 to 4, wherein:
each shear component (551, 552) comprises a first sleeve (653, 654) and a shear bolt (663);
the shear bolt passes (663) through the first sleeve (653, 654); and
the first sleeve (653, 654) is configured to maintain the same position relative to either the beam housing (660) or the beam (642) after the shear bolt (663) is broken.

7. The reversible plough of claim 6, wherein the first sleeve (653, 654) is located at least partially within an opening (659, 661) in either the beam housing (660) or the beam (642).

8. The reversible plough of claim 6 or claim 7, wherein:
each shear component (551, 552) also comprises a second sleeve (653, 654);
the shear bolt (663) passes through the second sleeve (653, 654), such that the first sleeve (653, 654) and the second sleeve (653, 654) are spaced apart along the length of the shear bolt (663); and
the second sleeve (653, 654) is configured to maintain the same position relative to the other one of the beam housing (660) and the beam (642) when the shear bolt (663) is broken.

9. The reversible plough of claim 8, wherein the second sleeve (653, 654) is located at least partially within an opening (659, 661) in the other one of the beam housing (660) and the beam (642).

10. The reversible plough of claim 8 or claim 9, wherein the shear bolt (663) is configured to break at a position between the first sleeve (653, 654) and the second sleeve (653, 654).

11. The reversible plough of any one of claims 1 to 5, wherein each shear component (651, 652) comprises:
a first shear part (665); and
a second shear part (667), wherein the second shear part (667) is spaced apart from the first shear part (665) in a lateral dimension with respect to the direction of travel of the reversible plough when it is in a working configuration;
wherein:
the first shear part (665), when unbroken, provides a mechanical connection between a first region of the beam (642) and a first region the beam housing (660) to maintain the beam (642) in a working position;
the second shear part (667), when unbroken, provides a mechanical connection between a second region of the beam (642) and a second region the beam housing (660) to maintain the beam (642) in the working position;
the first region of the beam is spaced apart from the second region of the beam in a lateral dimension with respect to the direction of travel of the reversible plough when it is in the working configuration; and
the first region of the beam housing is spaced apart from the second region of the beam housing in a lateral dimension with respect to the direction of travel of the reversible plough when it is in the working configuration.

12. The reversible plough of claim 11, wherein:
the first shear part (665) and the second shear part (667) each comprise a first sleeve (653, 654) and a shear bolt (663);
each shear bolt (663) passes through its respective first sleeve(653, 654); and
each first sleeve (653, 654) is configured to maintain the same position relative to either the beam housing (660) or the beam (642) when the shear bolts (663) are broken.

13. The reversible plough of claim 12, wherein:
the first shear part (665) and the second shear part (667) each also comprises a second sleeve (653, 654);
each shear bolt (663) passes through its respective second sleeve (653, 654), such that the respective first sleeves (653, 654) and second sleeves (653, 654) are spaced apart with respect to each other along the length of the shear bolt (663); and
each second sleeve (653, 654) is configured to maintain the same position relative to the other one of the beam housing (660) and the beam (642) when the shear bolts (663) are broken.

14. The reversible plough of any one of claims 11 to 13, wherein each shear part is provided as a replaceable cartridge (755).

15. The reversible plough of claim 14, wherein each shear part (755) comprises a removable mechanical detent (757) for securing the shear part (755) in position with respect to the beam housing (660) and / or the beam (642).
